# EUROPEAN PATENT APPLICATION

(11) **EP 2 072 279 A2**
(43) Date of publication of application: **24.06.2009**
(21) Application number: 08021653.4
(22) Date of filing: 12.12.2008
(51) Int. Cl.: B60B 27/00, B60B 3/16

(54) **Rolling bearing device for wheel**

(30) Priority: 17.12.2007 JP 2007324319
(71) Applicant: JTEKT Corporation, Osaka-shi Osaka 542-8502 (JP)
(72) Inventor: Takada, Yoshito, Chuo-ku Osaka-shi Osaka 542-8502 (JP); Harada, Katsuyuki, Chuo-ku Osaka-shi Osaka 542-8502 (JP); Yu, Changxin, Ageo-shi Saitama 362-0013 (JP)
(74) Representative: Schaeberle, Steffen

(57) **Abstract**

A rolling bearing device for a wheel includes: an inner member (1); an outer member (3) disposed around an outer peripheral surface of the inner member (1) via rolling elements (2); and a wheel mounting flange (4) formed on an outer peripheral surface of the inner member (1) or the outer member. A predetermined number of bolt holes (14) are formed in a peripheral edge portion of the wheel mounting flange along a circumferential direction, and a shape between adjacent ones of the bolt holes is constituted by a straight line or a curved line located radially outwardly of a pitch circle diameter of the bolt holes in an outer shape of the wheel mounting flange.

## Description

### BACKGROUND OF THE INVENTION

### 1. Field of the Invention

The present invention relates to a rolling bearing device for a wheel, and more particular to a rolling bearing device for a wheel in which weight reduction is attained through improvement of the outer shape of a wheel mounting flange.

### 2. Related Art

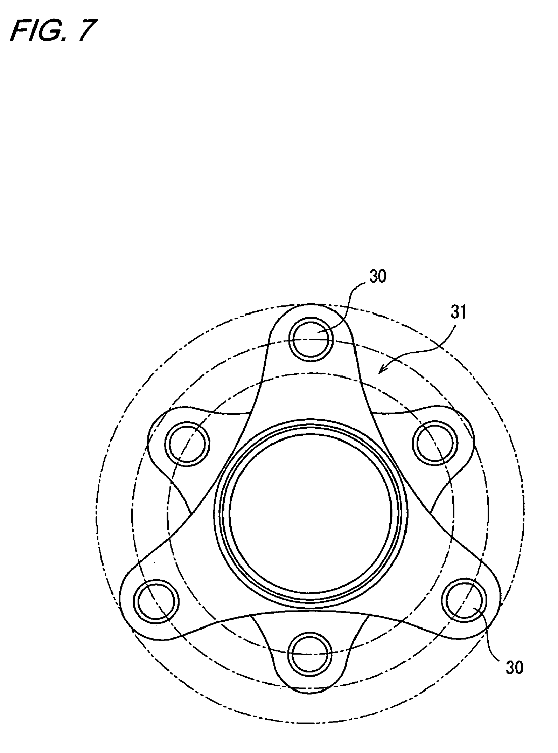

A wheel of an automobile is supported by a suspension apparatus through a rolling bearing device for a wheel, and the wheel is mounted by bolts to a wheel mounting flange formed on an outer peripheral surface of an outer member or an inner member constituting the bearing device. Although the outer shape of this flange is generally circular, a flange 31 has been proposed in which, as shown in Fig. 7, notched portions are formed by providing a large cut between adjacent ones of bolt holes 30 in compliance with the demand for lighter weight in recent years since the weight becomes large (e.g., refer to JP-A-57-101124).

However, if the amount of cut is made excessively large, the weight reduction can be promoted, but there is a problem in that the rigidity of the flange 31 can possibly decline.

### SUMMARY OF THE INVENTION

In view of the above-described circumstances, an object of the invention is to provide a rolling bearing device for a wheel which is capable of attaining a maximum weight reduction while maintaining the rigidity required for the wheel mounting flange.

The rolling bearing device for a wheel (hereafter, also referred to as the "bearing device") is a rolling bearing device for a wheel comprising: an inner member; an outer member disposed around an outer peripheral surface of the inner member via rolling elements; and a wheel mounting flange formed on an outer peripheral surface of one of the inner member and the outer member,
wherein a predetermined number of bolt holes are formed in a peripheral edge portion of the wheel mounting flange along a circumferential direction thereof, and
wherein a shape between adjacent ones of the bolt holes is constituted by a straight line or a curved line located radially outwardly of a pitch circle diameter of the bolt holes in an outer shape of the wheel mounting flange.

In the bearing device in accordance with the invention, since the shape between the adjacent ones of the bolt holes is constituted by a straight line or a curved line located radially outwardly of the pitch circle diameter of the bolt holes, it is possible to attain a weight reduction of the bearing device without practically lowering the rigidity. Concerning this, as a result of conducting various studies to attain the weight reduction of the bearing device while ensuring the required rigidity, the present inventors came to complete the invention upon discovering that, by taking note of the pitch circle diameter of a predetermined number of bolt holes formed in the peripheral edge portion of the wheel mounting flange, when forming the notched portions between the adjacent bolt holes, if each of these notched portions is formed in a portion located radially outwardly of the pitch circle diameter, the rigidity practically does not decline in substantial terms as compared with the case where the notched portions are not formed. Accordingly, as the shape between the adjacent ones of the bolt holes is constituted by a straight line or a curved line located radially outwardly of the pitch circle diameter, it is possible to attain a weight reduction of the wheel mounting flange and, hence, the bearing device without practically lowering the rigidity of the wheel mounting flange.

Preferably, the shape between the adjacent ones of the bolt holes is constituted by a curved line located radially outwardly of the pitch circle diameter of the bolt holes, and includes a circular arc circumscribing the pitch circle diameter of the bolt holes. In this case, since the shape between the adjacent ones of the bolt holes is constituted by a curved line alone, it is possible to alleviate stress concentration. In addition, since shape between the adjacent ones of the bolt holes includes a circular arc circumscribing the pitch circle diameter of the bolt holes, i.e., since the shape (curved line) is such that as practically large portion as possible is cut out between the bolt holes, it is possible to attain a maximum weight reduction while alleviating the stress concentration.

According to the bearing device in accordance with the invention, it is possible to attain a maximum weight reduction while maintaining the rigidity required for the flange.

### BRIEF DESCRIPTION OF THE DRAWINGS

Fig. 1 is an explanatory front elevational view of a bearing device in accordance with an embodiment of the invention;
Fig. 2 is a cross-sectional view, taken along line I-I, of the bearing device shown in Fig. 1
Fig. 3 is an explanatory front elevational view of the bearing device in accordance with Reference Example;
Fig. 4 is an explanatory front elevational view of the bearing device in accordance with Comparative Example 1;
Fig. 5 is an explanatory front elevational view of the bearing device in accordance with Comparative Example 2;
Fig. 6 is a diagram illustrating the shaft rigidity of the bearing devices in accordance with the Example and the Comparative Examples; and
Fig. 7 is an explanatory front elevational view of a conventional bearing device.

### DETAILED DESCRIPTION OF THE PREFERRED EMBODIMENTS

Referring now to the accompanying drawings, a detailed description will be given of an embodiment of a bearing device in accordance with the invention.

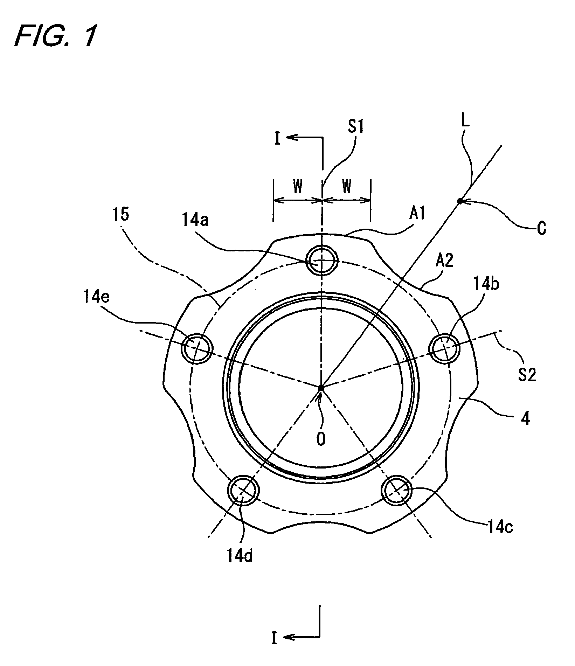

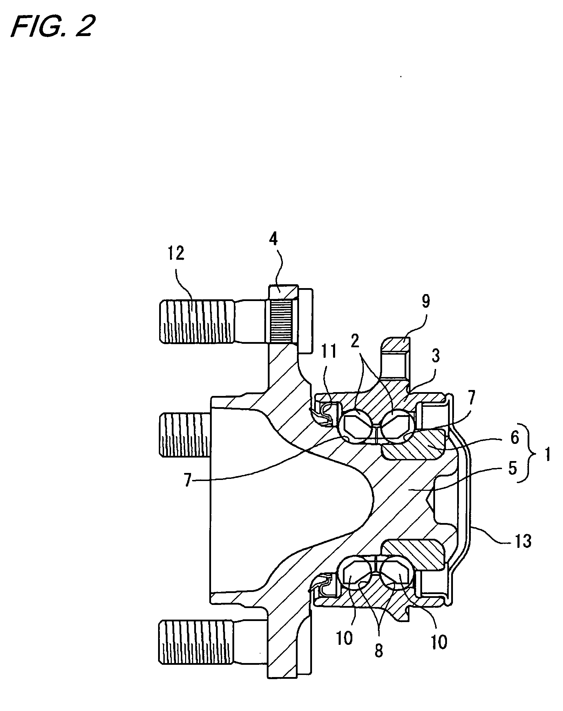

Fig. 1 is an explanatory front elevational view of the bearing device in accordance with the embodiment of the invention, and Fig. 2 is a cross-sectional view, taken along line I-I, of the bearing device shown in Fig. 1. The bearing device shown in Figs. 1 and 2 has a conventionally known configuration and is comprised of an inner member 1, an outer member 3 disposed around an outer peripheral surface of this inner member 1 via rolling elements 2, and a wheel mounting flange 4 formed on an outer peripheral surface of the inner member 1. More specifically, the inner member 1, which consists of a hub shaft 5 and an inner-ring constituting member 6 fitted on an outer peripheral surface of an end of this hub shaft 5, constitutes an inner ring, and a pair of raceway surfaces 7 with a circular arc-shaped cross section are respectively formed on outer peripheries of the hub shaft 5 and the inner-ring constituting member 6. In addition, a pair of raceway surfaces 8 with a circular arc-shaped cross section opposing the respective raceway surfaces 7 are formed on an inner peripheral surface of the outer member 3 which is disposed concentrically with the inner member 1 on the outside cylindrical side thereof and constitutes the outer ring. Further, the rolling elements 2 constituted by balls are interposed between the double-row raceway surfaces 7 and 8.

In addition, the wheel mounting flange 4 is formed on the outer periphery of the hub shaft 5 constituting the inner member 1, and a wheel mounting flange 9 is formed on the outer periphery of the outer member 3. It should be noted that reference numerals 10 and 11 respectively denote a cage for retaining the rolling elements 2 at predetermined intervals and a seal for sealing an annular space between the outer member 2 and the inner member 1. In addition, reference numeral 12 denotes a bolt for mounting the wheel mounting flange 4 to a wheel-side member such as a wheel, and reference numeral 13 denotes a bottomed short cylindrical cover fabricated by subjecting a metal such as iron to press forming, the cover 13 being fitted to an inner peripheral surface of an end portion of the outer member 3. It should be noted that although in this embodiment the wheel mounting flange 4 is formed on the outer periphery of the inner member 1, this wheel mounting flange 4 can alternatively be formed on the outer periphery of the outer member 3, and the place of its formation is not particularly limited in the invention.

The characteristic of the bearing device in accordance with the invention lies in that outer peripheral portions of the wheel mounting flange 4 are removed as practically as possible without lowering the rigidity required for the wheel mounting flange 4. Specifically, portions which are each disposed between adjacent ones of bolt holes 14 in the peripheral edge portion of the wheel mounting flange 4 and located radially outwardly of a pitch circle diameter of the bolt holes 14 are removed to thereby attain weight reduction. In other words, the outer shape between adjacent ones of the bolt holes 14 in the peripheral edge portion of the wheel mounting flange 4 is formed by a straight line or a curved line located radially outwardly of the pitch circle diameter of the bolt holes 14.

Referring to Fig. 1, a description will be given of a method of determining the outer shape of the wheel mounting flange in the bearing device in accordance with the invention. It should be noted that although, in this example, five bolt holes 14 are formed in the peripheral edge portion of the wheel mounting flange 4 at equal intervals along the circumferential direction, the number of the bolt holes 14 is not limited to five, and may be four or six, for example.

In Fig. 1, reference numeral 15 denotes a pitch circle diameter (PCD) of a line connecting the centers of respective bolt holes 14a, 14b, 14c, 14d, and 14e. In a predetermined range W on each side of a line S1 connecting the center of the bolt hole 14a, for example, and a shaft center O of the hub shaft 5, the outer shape of the wheel mounting flange 4 is a circular arc shape A1 of a circle whose center is the shaft center O. Further, the outer shape between two adjacent bolt holes, e. g. , the bolt holes 14a and 14b, excluding this circular arc-shaped portion is a circular arc shape A2 of a circle having its center C on a bisector L of the segment S1 connecting the shaft center O and the center of the bolt hole 14a and a segment S2 connecting the shaft center O and the center of the bolt hole 14b. The circular arc shape A1 and the circular arc shape A2 are connected so as to present a curved shape as a whole by a curved line having a small curvature. Thus, since all components of the outer shape of the wheel mounting flange 4 in accordance with this embodiment are constituted by curved lines, it is possible to alleviate the stress concentration. It should be noted that although in this embodiment a slight distance is provided between the aforementioned circular arc shape A2 and the pitch circle diameter 15 of the bolt holes, a further reduction in weight can be attained by making the circular arc shape A2 a circular arc circumscribing the pitch circle diameter 15.

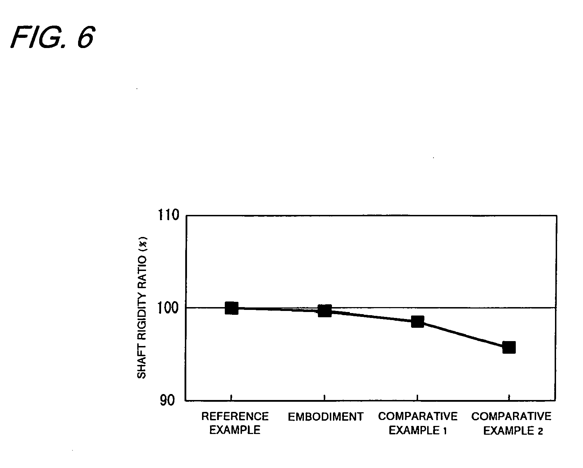

Fig. 6 is a diagram illustrating the change of shaft rigidity in cases where the outer shape of the wheel mounting flange is variously changed.

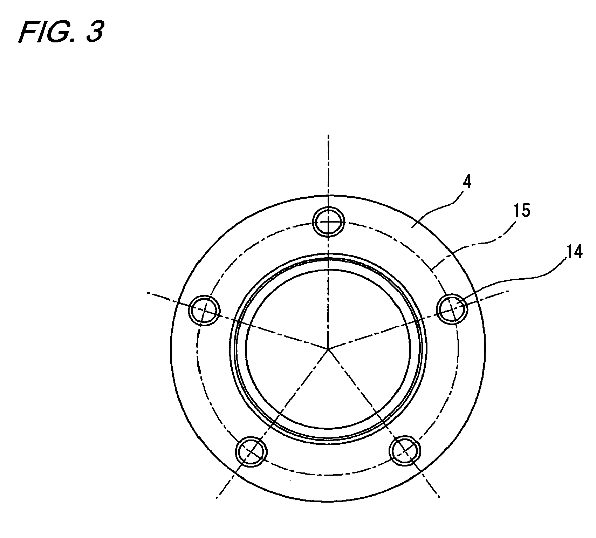

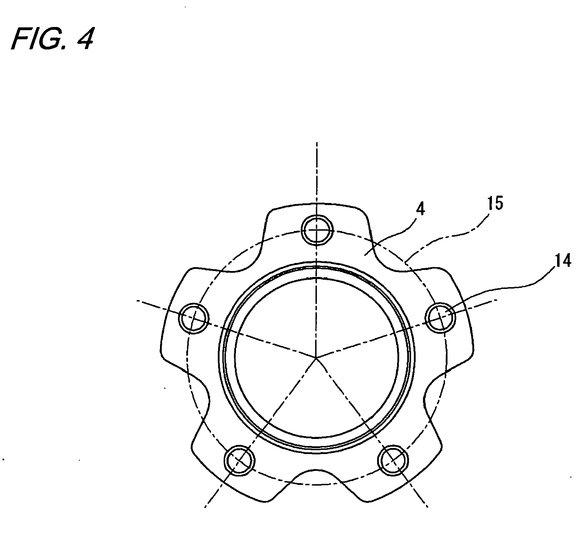

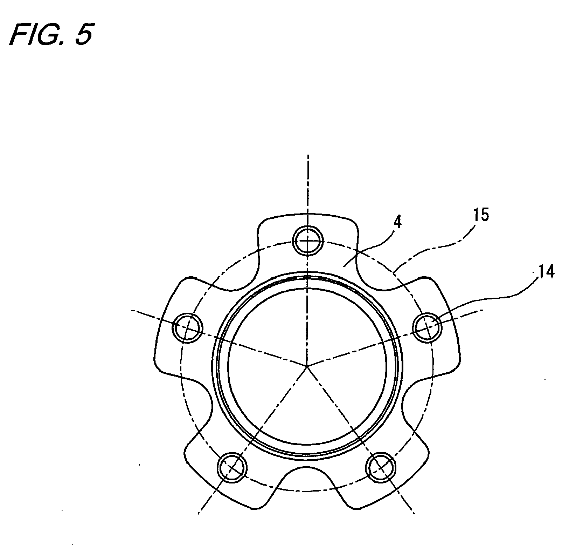

"Reference Example" is a bearing device having a wheel mounting flange of a shape shown in Fig. 3. "Embodiment" is the bearing device having the wheel mounting flange of the shape shown in Fig. 1, and "Comparative Examples 1 and 2" are bearing devices respectively having shapes shown in Figs. 4 and 5. In the Reference Example, the outer shape of the wheel mounting flange is a circle itself whose center is the axis of the hub shaft, and notches portions are not respectively formed between adjacent ones of the bolt holes. Further, in Fig. 7, the shaft rigidity in this Reference Example is set as a reference (100%). In the Comparative Example 1, notches portions are formed even up to the slightly inner side of the pitch circle diameter, whereas, in the Comparative Example 2, notches portions are formed even up to the vicinity of the outer peripheral surface of the hub shaft.

From Fig. 6, it can be appreciated that the Embodiment possesses shaft rigidity substantially equivalent to that of the Reference Example in which the notched portions are not formed. Although the shaft rigidity is slightly lowered in this case, it can be said that its amount is within the range of analytical error. In addition, it can be appreciated from the Comparative Examples 1 and 2 that if the notched portions are formed in such a manner as to cut into the axial side of the hub shaft by exceeding the pitch circle diameter, the shaft rigidity declines, and that the more inwardly the notches are cut, the greater the degree of its decline.

## Claims

1. A rolling bearing device for a wheel comprising:
an inner member; an outer member disposed around an outer peripheral surface of the inner member via rolling elements; and a wheel mounting flange formed on an outer peripheral surface of one of the inner member and the outer member,
wherein a predetermined number of bolt holes are formed in a peripheral edge portion of the wheel mounting flange along a circumferential direction thereof, and
wherein a shape between adjacent ones of the bolt holes is constituted by a straight line or a curved line located radially outwardly of a pitch circle diameter of the bolt holes in an outer shape of the wheel mounting flange.

2. The rolling bearing device for a wheel according to claim 1, wherein the shape between the adjacent ones of the bolt holes is constituted by a curved line located radially outwardly of the pitch circle diameter of the bolt holes, and includes a circular arc circumscribing the pitch circle diameter of the bolt holes.

3. The rolling bearing device for a wheel according to claim 1, wherein the shape between the adjacent ones of the bolt holes is constituted by a circular arc whose center is coincided with a shaft center of the wheel mounting flange and a circular arc circumscribing the pitch circle diameter of the bolt holes.

4. The rolling bearing device for a wheel according to claim 1, wherein the inner member includes an inner ring comprising a hub shaft and an inner-ring constituting member fitted on an outer peripheral surface of an end of the hub shaft, and a first raceway surface with a circular arc-shaped cross section is formed on outer peripheries of the hub shaft and the inner-ring constituting member,
the outer member includes an outer ring that is disposed concentrically with the inner member, and a second raceway surface with a circular arc-shaped cross section opposing the first raceway surface is formed on an inner peripheral surface of the outer member on an outside cylindrical side thereof,
the rolling elements constituted by balls are interposed between the first and second raceway surfaces.
